# EUROPÄISCHE PATENTSCHRIFT

(11) **EP 2 564 088 B1**
(45) Veröffentlichungstag und Bekanntmachung des Hinweises auf die Patenterteilung: **02.12.2015**
(21) Anmeldenummer: 11716908.6
(22) Anmeldetag: 27.04.2011
(51) Int. Cl.: F16G 13/16, H02G 11/00

(54) **ENDLOS UMLAUFENDES GLIEDERBAND MIT ENERGIEVERSORGUNG**
ENDLESSLY CIRCULATING LINK CONVEYOR WITH ENERGY SUPPLY
BANDE SANS FIN À MAILLONS, À ALIMENTATION EN ÉNERGIE

(30) Priorität: 29.04.2010 DE 202010006220 U
(43) Veröffentlichungstag der Anmeldung: 06.03.2013
(73) Patentinhaber: Igus GmbH, 51127 Köln (DE)
(72) Erfinder: BLASE, Frank, 51429 Bergisch Gladbach (DE); HERMEY, Andreas, 53773 Hennef (DE)
(74) Vertreter: Lippert, Stachow & Partner
(86) Internationale Anmeldenummer: PCT/EP2011/056646
(87) Internationale Veröffentlichungsnummer: WO 2011/134991

(56) Entgegenhaltungen:
- EP-A1- 0 875 695
- EP-A2- 1 152 510
- DE-A1- 4 444 280
- DE-A1- 10 301 205

## Beschreibung

Die vorliegende Erfindung betrifft ein endlos umlaufendes Gliederband mit Energieversorgung über eine Energieführungskette, sowie ein Glied zur Erzeugung eines derartigen Gliederbandes als auch eine Gliederbandanordnung einhaltend ein Gliederband.

Es ist bekannt, umlaufende (endlose) Transportbänder mit Verbrauchern auszurüsten, die durch in dem Transportband integrierte Versorgungsleitungen mit gasförmigen oder flüssigen Medien bzw. Vakuum, elektrischer Energie und/oder Steuersignalen für die Verbraucher versorgt werden. Als Verbraucher werden beispielhaft Greifer oder Sauglippen zur Aufnahme, Transport und Abgabe an anderer Stelle von Gegenständen zu Montagezwecken ggf. mit zusätzlichen Bearbeitungsautomaten eingesetzt werden.

Aus DE 103 01 205 A1 ist ein endlos umlaufendes Gliederband mit Energieversorgung von einer ortsfesten Quelle bekannt, enthaltend
eine Vielzahl von gegeneinander schwenkbar miteinander verbundenen Gliedern, die gemeinsam ein Gliederband bilden, das zum Umlauf antreibbar ist, und
eine Energieführungskette, deren eines Ende mit dem Gliederband mitläuft und deren anderes Ende innerhalb des Umlaufs drehbar angeordnet ist, und über die das Gliederband mit Versorgungsleitungen verbunden werden kann.

Die Erfindung hat sich zur Aufgabe gestellt, ein integriertes System aus umlaufendem Transportband und mit Energieversorgung von einer stationären Quelle zu schaffen, das einfach zu montieren ist, variabel in Bezug auf die Umlauflänge und Nachrüstungen mit zusätzlichen Versorgungsleitungen ist und in Form eines Baukastensystems aufbaubar ist.

Die Aufgabe wird gemäß den beigefügten unabhängigen Ansprüchen gelöst. Die abhängigen Ansprüche betreffen vorteilhafte Ausführungsformen der Erfindung.

Erfindungsgemäß wird das Transportband als Gliederband ausgestaltet, wobei die Glieder einen Kanal zur Aufnahme von Verteilungs-Versorgungsleitungen und daneben eine Führungsrinne für die Energieführungskette aufweisen. Mindestens ein Glied des Bandes weist auf der der Führungsrinne abgewandten Seite, die bezüglich des Umlaufweges des Transportbandes nach außen gerichtet ist, eine Montageplatte für die Montage von Verbrauchern. Vorzugsweise sind alle Glieder identisch, so dass auf jedem Glied des Bandes Verbraucher installierbar sind. Vorzugsweise sind die Glieder einstückig gestaltet. Die Glieder weisen ferner in Laufrichtung des Transportbandes vorne und hinten Gelenkbolzen und/oder Gelenkaufnahmen auf.

Die Verbindung der Glieder zum Band kann über separate Verbindungselemente erfolgen, die komplementäre Gelenkaufnahmen und/oder Gelenkbolzen aufweisen und in die Gelenkbolzen und/oder Gelenkaufnahmen der Glieder eingreifen.

Die Glieder des Bandes können aber auch so gestaltet sein, dass zwei Glieder direkt gelenkig über Gelenkbolzen des einen Gliedes, die in Gelenkaufnahmen des anderen Gliedes eingreifen, verbunden sind.

Die Umlaufbahn der Gliederkette wird über mindestens zwei Umlenkrollen definiert, zwischen denen die Gliederkette linear gestreckt ist. Die Breite der Umlenkrollen übersteigt die Breite des Kanals nicht, so dass der Raum innerhalb des Umlaufs auf der Seite, an dem die Führungsrinnen für die Energieführungskette befindet, frei bleibt. Die Seitenwände des Kanals können vorzugsweise Vorsprünge aufweisen, die die Umlenkrolle zur Seitlichen Führung des Gliederbandes umgreifen. Die der Umlenkrolle zugewandten Seite der Glieder kann ferner eine quer zur Umlaufrichtung ausgerichtete Zahnstruktur aufweisen, in die eine komplementäre Zahnstruktur eines Antriebsmittels zum Antrieb des Gliederbandes eingreifen kann. Das Antriebsmittel kann ein Rotationsantrieb für eine der Umlenkrollen sein, wobei die komplementäre Zahnstruktur auf der Rollfläche der Umlenkrolle angebracht ist. Andererseits kann auch ein getrennter Antrieb mittels Zahnkränzen oder einen zwischen den Umlenkrollen vorzusehenden angetriebenen Zahnriemen, der an seiner Außenseite die komplementäre Zahnstruktur hat, vorgesehen sein.

Zentral innerhalb des Umlaufs ist das nicht mitlaufende Ende der Energieführungskette schwenkbar befestigt. An dem nicht mitlaufenden Ende der Energieführungskette werden über eine vorzugsweise zur Schwenkachse koaxiale Drehdurchführung Versorgungsleitungen für die Verbraucher eingeleitet.

Das andere Ende der Energieführungskette ist mit einem der Glieder des Gliederbandes verbunden, so dass dieses mit dem umlaufenden Gliederband mitläuft. Hier werden die Versorgungsleitungen aus der Energieführungskette herausgeführt und in den Kanal des Gliedes eingeleitet und an die Verteilungsleitungen angeschlossen. Es kann auch vorgesehen sein, dass die Anschlussmittel für die Versorgungsleitungen auf der Montageplatte eines Gliedes montiert sind.

Zumindest das Untertrum der Energieführungskette liegt in der Führungsrinne durch die aneinandergereihten Glieder des Gliederbandes gebildete Führungsrinne auf und wird seitlich geführt. Je nach dem Radius des Umlenkbereiches der Energieführungskette, der durch entsprechende Begrenzungen der Schwenkbarkeit der Kettenglieder gegeneinander definiert ist, wird auch das Obertrum durch die Führungsrinne des Gliederbandes seitlich geführt. Vorzugsweise wird der Radius des Umlenkbereiches der Energieführungskette so gewählt, dass sowohl Untertrum als auch Obertrum der Kette in der Führungsrinne geführt werden.

Das Gliederband wird bevorzugt zumindest zwischen den Umlenkrollen in das Gliederband seitlich umgreifenden Führungsrinnen geführt. Hierzu können an den Gliedern und/oder den Verbindungselementen seitlich Vorsprünge vorgesehen sein, die in die Führungsrinnen eingreifen.

Die Erfindung betrifft weiterhin ein Glied für ein Gliederband mit einer Längsausdehnung und einer Querausdehnung enthaltend einen Kanal zur Aufnahme von Verteilungsleitungen, der sich in Längsausdehnung erstreckt, und seitlich neben dem Kanal eine nach oben offene sich in Längsausdehnung erstreckende Führungsrinne für die gleitende Aufnahme einer Energieführungskette, sowie sich beiderseitig in Richtung der Querausdehnung erstreckende Gelenkbolzen bzw. Gelenkaufnahmen zur gelenkigen Verbindung mit mindestens zwei weiteren Gliedern.

Ein derartiges Glied kann aus der EP 0 875 695 A1 entnommen werden, sofern sich die zwischen den Zentralkörpern und den Wandungen angeordneten Führungsabschnitte für die gleitende Aufnahme einer Energieführungskette eignen. Die der Erfindung zugrundeliegende Aufgabe wird gemäß dem unabhängigen Anspruch 6 gelöst.

Die Erfindung betrifft schließlich eine Gliederbandanordnung, wie sie aus der schon oben genannten DE 103 01 205 A1 bekannt ist, enthaltend ein umlaufendes Gliederband und

eine Energieführungskette für Versorgungsleitungen, wobei ein Ende der Energieführungskette zentral innerhalb des Umlaufs drehbar angeordnet ist und das andere Ende der Energieführungskette mit einem Glied des Gliederbandes verbunden ist, über das das Gliederband an die Versorgungsleitungen angeschlossen werden kann, wobei das Gliederband aus einer Vielzahl von Gliedern besteht.

Die der Erfindung zugrundeliegende Aufgabe wird für eine Gliederbandanordnung gemäß dem unabhängigen Anspruch 8 gelöst.

Die Erfindung wird nachfolgend anhand der beigefügten Figuren beispielhaft erläutert, wobei gleiche Bezugszeichen in verschiedenen Figuren funktional gleiche Elemente bezeichnen.
Fig. 1 zeigt eine perspektivische Darstellung eines erfindungsgemäßen Gliedes des Gliederbandes von unten;
Fig. 2 zeigt eine Ansicht des Gliedes gemäß Fig. 1 quer zur Längsausdehnung des Gliederbandes;
Fig. 3 zeigt eine Ansicht des Gliedes gemäß Fig. 1 parallel zur Längsausdehnung des Gliederbandes;
Fig. 4 zeigt eine perspektivische Darstellung zweier benachbarter Glieder mit Verbindungselementen von oben;
Fig. 5 zeigt eine perspektivische Darstellung eines Abschnitts des Gliederbandes von oben;
Fig. 6 zeigt eine Seitenansicht gemäß Fig. 5;
Fig. 7 zeigt eine perspektivische Ansicht gemäß Fig. 5 von unten;
Fig. 8 zeigt einen vergrößerten Querschnitt A-A aus Fig. 10d einer erfindungsgemäßen Gliederbandanordnung;
Fig. 9 zeigt einen verkleinerten Querschnitt C-C aus Fig. 8;
Fig. 10a zeigt einen verkleinerten Querschnitt B-B aus Fig. 8;
Fig. 10b,c und d zeigen gemeinsam mit Fig. 10a verschiedenen Umlaufphasen der erfindungsgemäßen Gliederbandanordnung.

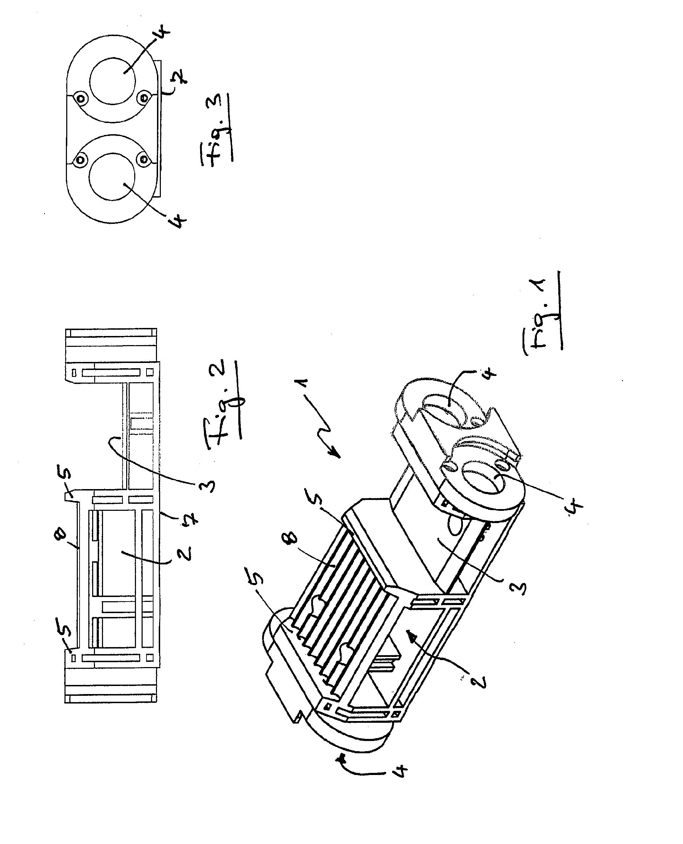

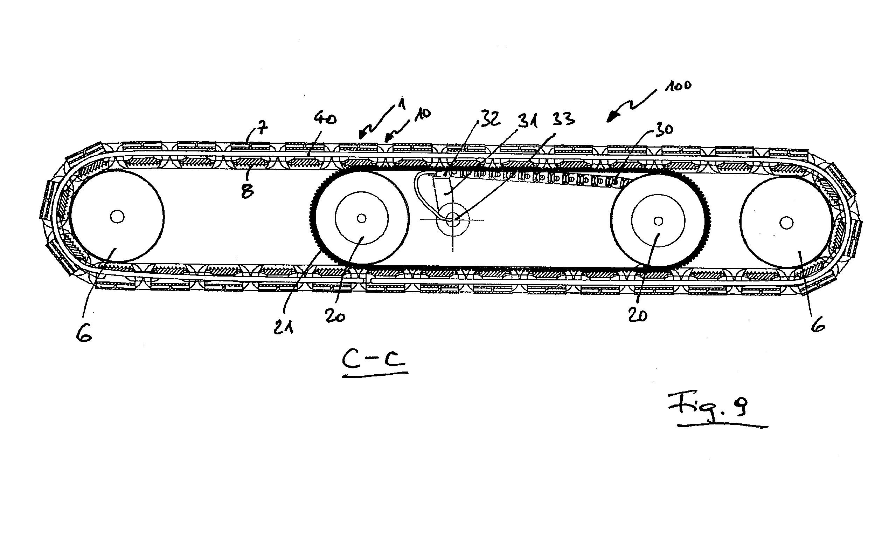

Wie aus Fig. 1, 2 und 3 ersichtlich, weist das Glied des Gliederbandes 1 einen sich in Längsrichtung erstreckenden Kanal 2, eine seitlich von dem Kanal 2 angeordnete Führungsrinne 3, seitliche Gelenkaufnahmen 4, Führungsstege 5 zur Führung des Gliederbandes auf der Umlenkrolle 6 (Fig. 9), eine Montageplatte 7 sowie unterhalb des Kanals 2 eine in Querrichtung verlaufende Zahnstruktur 8 zum Eingriff durch ein Antriebsorgan auf.

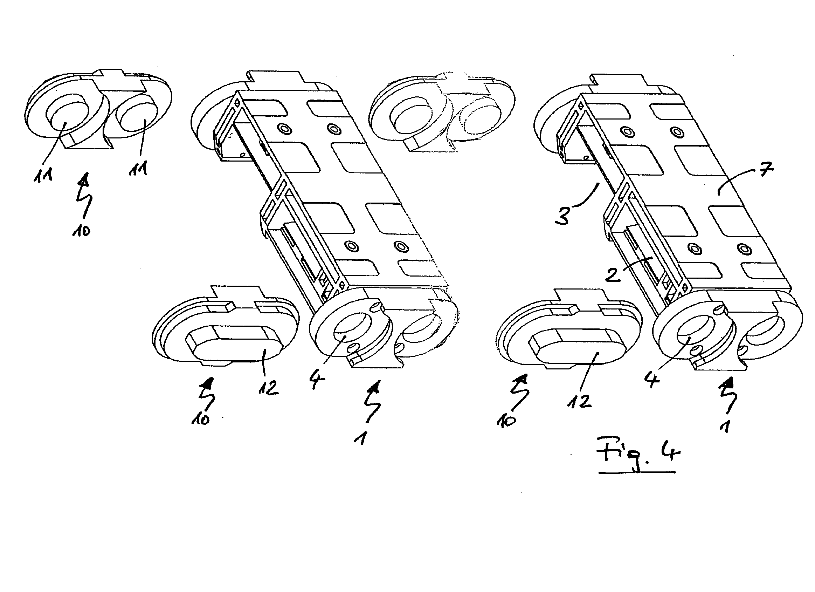

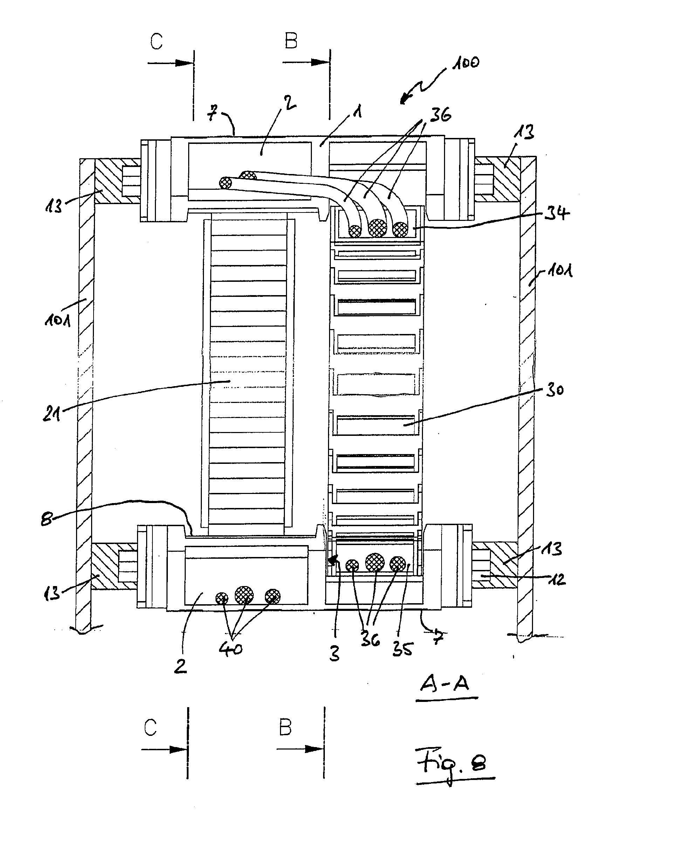

Fig. 4 zeigt zwei Glieder 1 und vier Verbindungsglieder 10. Die Verbindungsglieder weisen Gelenkzapfen 11 auf, die nach Zusammenbau in die Gelenkaufnahmen 4 eingreifen und die Glieder 1 gelenkig verbinden. Die nach außen gerichteten Vorsprünge 12 dienen der Führung des Gliederbandes in den Führungsrinnen 13 (Fig. 8).

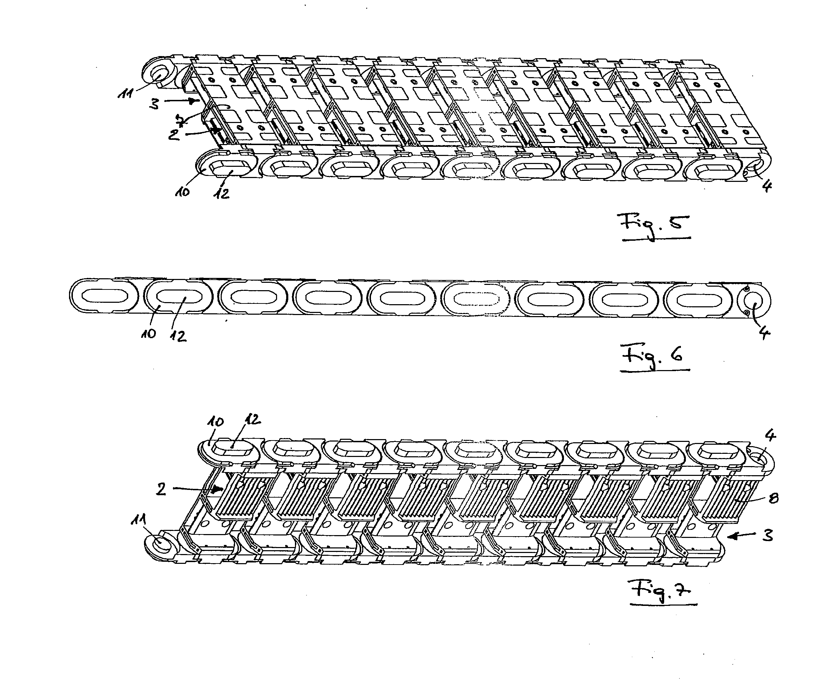

Fig. 5, 6 und 7 zeigen einen aus Gliedern 1 und Verbindungselementen 10 zusammengesetzten Abschnitt eines erfindungsgemäßen Gliederbandes.

Aus Fig. 9, die einen Schnitt C-C aus Fig. 8 darstellt, ist die erfindungsgemäße Gliederbandanordnung 100 mit dem über Umlenkrollen 6 geführten aus Vielzahl von Gliedern 1 bestehenden endlosen Gliederband erkennbar, das über einen über Antriebsräder 20, von denen eine angetrieben ist, mittels Zahnriemen 21, deren Zähne in die Zahnstruktur 8 der Glieder 1 eingreifen, angetrieben wird. Ferner sind im Hintergrund die Energieführungskette 30 mit ihrem nicht mitlaufenden Ende 32 über den Hebel 31 um die Achse 33 drehbar gehalten sowie die Verteilungsleitung 40 gezeigt, die innerhalb des Kanals 2 verläuft.

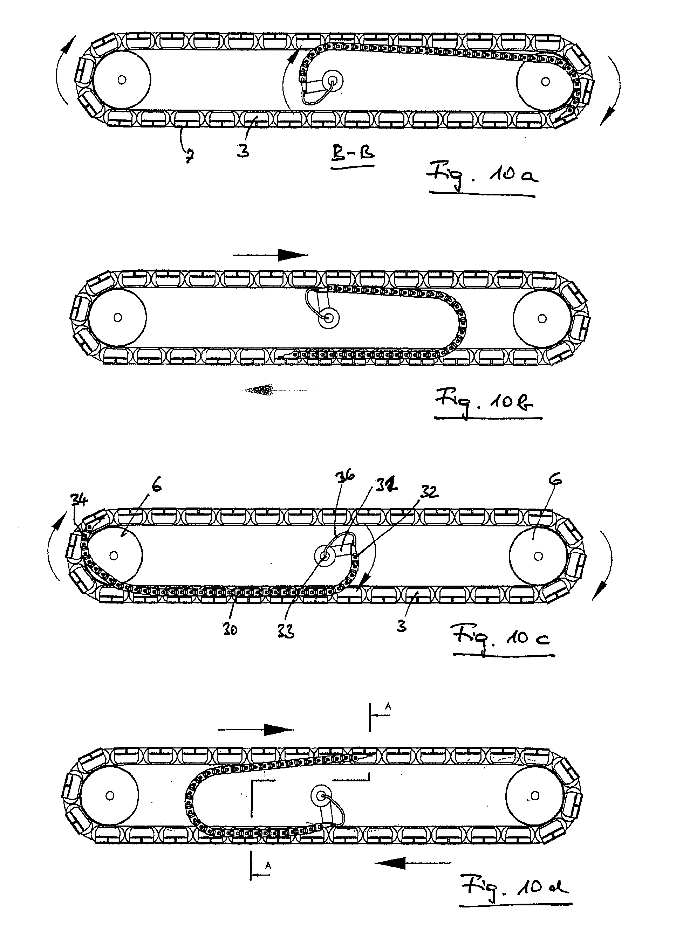

Aus der Querschnittszeichnung Fig.8, die einen Schnitt A-A aus Fig. 10a darstellt, ist erkennbar, dass die Gliederbandanordnung 100 in einem Rahmen oder Gehäuse 101 angeordnet ist. An dem Rahmen sind Führungsschienen 13 befestigt, in die die Vorsprünge 12 des Verbindungselemente 10 eingreifen.

In dem Kanal 2 des unten im Querschnitt sichtbaren Gliedes 1 verlaufen die Verteilungsleitungen 40. Rechts neben Zahnriemen 21 verläuft die Energieführungskette 30, die aus einer Vielzahl gelenkig verbundener Kettenglieder besteht, die gemeinsam einen Kanal für die Aufnahme der Versorgungsleitungen bilden. Die Energieführungskette 30 ist in der durch die Glieder des Bandes gebildete Führungsrinne 3 geführt. In dem im Querschnitt erkennbaren unteren Kettenglied 35 sind die Versorgungsleitungen 36 sichtbar, die in dem oberen im Querschnitt erkennbaren Kettenglied 34 aus der Energieführungskette 30 herausgeführt und in den Kanal des benachbarten Gliedes 1 des Gliederbandes überführt werden. Das Kettenglied 34 ist mit dem benachbarten Glied des Gliederbandes verbunden und läuft mit diesem mit.

In Fig. 10 a, b, c, und d sind schließlich verschiedene aufeinanderfolgende Phasen des Umlaufs von Gliederband und Energieführungskette dargestellt, wobei die Pfeile die Umlaufrichtung angeben.

## Patentansprüche

1. Endlos umlaufendes Gliederband mit Energieversorgung von einer ortsfesten Quelle enthaltend eine Vielzahl von gegeneinander schwenkbar miteinander verbundenen Gliedern (1), die gemeinsam ein Gliederband bilden, das zum Umlauf antreibbar ist, eine Energieführungskette (30), deren eines Ende mit dem Gliederband mitläuft und deren anderes Ende (32) innerhalb des Umlaufs drehbar angeordnet ist, und über die das Gliederband mit Versorgungsleitungen (36) verbunden werden kann,
**dadurch gekennzeichnet, dass** im Gebrauch das Gliederband über Umlenkrollen (6) eine Umlaufbahn beschreibt,
die Glieder (1) des Gliederbandes einen Kanal (2) zur Aufnahme von Verteilungsleitungen (40) und seitlich neben dem Kanal eine Führungsrinne (3) zur Führung der Energieführungskette (30) aufweisen, wobei mindestens eines der Glieder (1) an seiner Oberseite eine Montagefläche für Verbraucher aufweist, und eines (34) der Glieder (1) für den Anschluss des mitlaufenden Endes der Energieführungskette (30) eingerichtet ist.

2. Gliederband nach Anspruch 1, **dadurch gekennzeichnet, dass** Verbindungselemente (10) zur gelenkigen Verbindung je zweier benachbarter Glieder (1) vorgesehen sind, die mittels Gelenkzapfen (11) in entsprechende Gelenkaufnahmen (4) der Glieder (1) eingreifen.

3. Gliederband nach Anspruch 1, **dadurch gekennzeichnet, dass** Verbindungselemente zur gelenkigen Verbindung je zweier benachbarter Glieder vorgesehen sind, die Gelenkaufnahmen aufweisen, in die entsprechende Gelenkzapfen der Glieder eingreifen.

4. Gliederband nach einem der vorhergehenden Ansprüche, **dadurch gekennzeichnet, dass** die Glieder (1) oder die Verbindungselemente (10) seitliche Vorsprünge (12) zur Führung des Gliederbandes in entsprechenden Führungsschienen (13) aufweisen.

5. Gliederband nach einem der vorgehenden Ansprüche, **dadurch gekennzeichnet, dass** die Unterseite einiger Glieder (1) mit einer quer zur Umlaufrichtung angeordneten Zahnstruktur (8) versehen ist zum Eingriff einer komplementären Zahnstruktur (8) eines Antriebsmittels, wobei sich die Zahnstruktur (8) des Gliedes (1) über den Bereich unterhalb des Kanals (2) erstreckt.

6. Glied (1) für ein Gliederband mit einer Längsausdehnung und einer Querausdehnung enthaltend einen Kanal (2) zur Aufnahme von Verteilungsleitungen (40), der sich in Längsausdehnung erstreckt, und seitlich neben dem Kanal (2) eine nach oben offene sich in Längsausdehnung erstreckende Führungsrinne(3) für die gleitende Aufnahme einer Energieführungskette (30), sowie sich beidseitig in Richtung der Querausdehnung erstreckende Gelenkbolzen bzw. Gelenkaufnahmen (4)zur gelenkigen Verbindung mit mindestens zwei weiteren Gliedern (1), wobei die Unterseite des Gliedes (1) unterhalb des Kanals (2) eine sich in Querrichtung erstreckende Zahnstruktur (8) aufweist.

7. Glied (1) nach Anspruch 6, **dadurch gekennzeichnet, dass** die Oberseite des Gliedes (1) eine Montageplatte (7) für die Anbringung von Verbrauchern aufweist.

8. Gliederbandanordnung (100) enthaltend ein umlaufendes Gliederband, und eine Energieführungskette (30) für Versorgungsleitungen (36), wobei ein Ende (32) der Energieführungkette (30) zentral innerhalb des Umlaufs drehbar angeordnet ist und das andere Ende der Energieführungskette (30) mit einem Glied (1) des Gliederbandes verbunden ist, über das das Gliederband an die Versorgungsleitungen (36) angeschlossen werden kann,
wobei das Gliederband aus einer Vielzahl von Gliedern (1) besteht,
**dadurch gekennzeichnet, dass** die Glieder (1) jeweils einen in Umlaufrichtung des Gliederbandes sich erstreckenden Kanal (2) zur Aufnahme von Verteilungsleitungen (40) und eine neben dem Kanal (2) angeordnete, innerhalb des Umlauf nach innen offene Führungsrinne (3) aufweisen, in der das Untertrum der Energieführungskette (30) seitlich geführt ist, ein Trägergerüst mit oberen und unteren Führungsschienen (13) vorgesehen ist, in denen die lineare Umlaufstrecke des Gliederbandes seitlich geführt ist, und
Umlenkrollen (6) vorgesehen sind, über die das Gliederband von der oberen in die untere Führungsschiene überführbar ist.

9. Gliederbandanordnung (100) nach Anspruch8, **dadurch gekennzeichnet, dass** zumindest einige der Glieder (1) auf ihrer innerhalb des Umlaufs nach innen weisenden Seite eine quer zur Umlaufrichtung ausgerichtete Zahnstruktur (8) aufweisen, die sich über den Bereich unterhalb des Kanals (2) erstreckt.

10. Gliederbandanordnung nach Anspruch 8 oder 9, **dadurch gekennzeichnet, dass** eine der Umlenkrollen (6) rotierend antreibbar ist.

## Claims

1. Endlessly circulating link conveyor with energy supply from a stationary source, comprising
a plurality of links (1) that are connected to one another such that they can pivot with respect to one another, jointly form a link conveyor that can be driven in circulating fashion,
an energy guiding chain (30), one end of which travels with the link conveyor and the other end (32) of which is arranged in rotating fashion within the circulatory path, and via which the link conveyor can be connected to supply lines (36),
**characterised in that** the link conveyor, when being used, follows a running path over deflection rollers (6),
the links (1) of the link conveyor display a channel (2) for receiving distribution lines (40) and,
laterally next to the channel, a guide groove (3) for guiding the energy guiding chain (30), where the upper face of at least one of the links (1) displays a mounting surface for consumers, and
one (34) of the links (1) is equipped for connecting the travelling end of the energy guiding chain (30).

2. Link conveyor according to Claim 1, **characterised in that** the connecting elements (10) for articulated connection of pairs of adjacent links (1) are provided, engaging corresponding hinge mounts (4) of the links (1) by means of pivot pins (11).

3. Link conveyor according to Claim 1, **characterised in that** the connecting elements for articulated connection of pairs of adjacent links are provided, displaying hinge mounts that are engaged by corresponding pivot pins of the links.

4. Link conveyor according to one of the preceding Claims, **characterised in that** the links (1) or the connecting elements (10) display lateral projections (12) for guiding the link conveyor in corresponding guide rails (13).

5. Link conveyor according to one of the preceding Claims, **characterised in that** the underside of some links (1) is provided with a tooth structure (8), oriented transversely to the direction of circulation, for engaging a complementary tooth structure (8) of a driving mechanism, where the tooth structure (8) of the link (1) extends over the area below the channel (2).

6. Link (1) for a link conveyor, with a longitudinal extension and a transverse extension, containing a channel (2) for receiving distribution lines (40) that extends in the longitudinal direction, and
laterally next to the channel (2), a guide groove (3), open towards the top and extending in the longitudinal direction, for sliding reception of an energy guiding chain (30), as well as hinge pins or hinge mounts (4), extending in the transverse direction on both sides, for articulated connection to at least two further links (1), where the underside of the link (1) displays a tooth structure (8) extending in the transverse direction below the channel (2).

7. Link (1) according to Claim 6, **characterised in that** the upper side of the link (1) displays a mounting plate (7) for attaching consumers.

8. Link conveyor arrangement (100), comprising a circulating link conveyor, and
an energy guiding chain (30) for supply lines (36), where one end (32) of the energy guiding chain (30) is located centrally within the circulatory path in rotating fashion and the other end of the energy guiding chain (30) is connected to a link (1) of the link conveyor, via which the link conveyor can be connected to the supply lines (36),
where the link conveyor comprises a plurality of links (1),
**characterised in that** the links (1) each display a channel (2), extending in the direction of circulation of the link conveyor, for receiving distribution lines (40), and a guide groove (3), located next to the channel (2), that is open towards the inside of the circulatory path and in which the lower strand of the energy guiding chain (3) is laterally guided, a supporting frame with upper and lower guide rails (13) is provided, in which the linear circulating stretch of the link conveyor is laterally guided, and
deflection rollers (6) are provided, via which the link conveyor can be transferred from the upper guide rail to the lower guide rail.

9. Link conveyor arrangement (100) according to Claim 8, **characterised in that** the side of at least some of the links (1) that faces towards the inside of the circulatory path displays a tooth structure (8) that is oriented transversely to the direction of circulation and extends over the area below the channel (2).

10. Link conveyor arrangement according to Claim 8 or 9, **characterised in that** one of the deflection rollers (6) can be driven in rotating fashion.

## Revendications

1. Bande à maillons de rotation sans fin, à alimentation en énergie provenant d'une source fixe, comprenant une pluralité de maillons (1) reliés les uns aux autres de manière à pouvoir pivoter les uns par rapport aux autres et formant ensemble une bande de maillons qui peut être entraînée en rotation, une chaîne d'acheminement d'énergie (30) dont une extrémité se déplace avec la bande à maillons et dont l'autre extrémité (32) est disposée de manière rotative à l'intérieur de la trajectoire de rotation et par l'intermédiaire de laquelle la bande à maillons peut être reliée à des lignes d'alimentation (36), **caractérisée en ce que** lors de l'usage, ladite bande à maillons décrit un trajectoire passant par des poulies de renvoi (6), les maillons (1) de la bande à maillons présentant un canal (2) pour recevoir des lignes de distribution (40) et, latéralement à côté du canal, une goulotte de guidage (3) pour guider la chaîne d'acheminement d'énergie (30), au moins un des maillons (1) présentant sur son côté supérieur une surface de montage pour consommateurs et un (34) des maillons (1) étant conçu pour le raccordement de l'extrémité de la chaîne d'acheminement d'énergie (30) se déplaçant avec la bande à maillons.

2. Bande à maillons selon la revendication 1, **caractérisée en ce que** des éléments de liaison (10) sont prévus pour la liaison articulée de deux maillons (1) respectivement voisins, lesdits éléments de liaison s'engageant dans des logements d'articulation (4) des maillons (1) par l'intermédiaire des pivots (11).

3. Bande à maillons selon la revendication 1, **caractérisée en ce que** des éléments de liaison sont prévus pour la liaison articulée de deux maillons respectivement voisins, lesdits éléments présentant des logements d'articulation dans lesquels s'engagent des pivots correspondants des maillons.

4. Bande à maillons selon l'une des revendications précédentes, **caractérisée en ce que** les maillons (1) ou les éléments de liaison (10) présentent des projectures latérales (12) pour le guidage de la bande à maillons dans des glissières de guidage (13) correspondantes.

5. Bande à maillons selon l'une des revendications précédentes, **caractérisée en ce que** la face inférieure de quelques maillons (1) est munie d'une structure à dents (8) arrangée transversalement par rapport à la direction de rotation, pour l'engagement d'une structure à dents (8) complète d'un moyen de commande, la structure à dents (8) du maillon (1) s'étendant sur la zone au-dessous du canal (2).

6. Maillon (1) pour une bande à maillons présentant une étendue longitudinale et une étendue transversale, comprenant un canal (2) pour recevoir des lignes de distribution (40) qui s'étend dans le sens de l'étendue longitudinale et, latéralement à côté du canal (2), une goulotte de guidage (3) ouverte vers le haut et s'étendant dans le sens de l'étendue longitudinale, pour recevoir de manière glissante une chaîne d'acheminement d'énergie (30), et des pivots ou logements d'articulation (4) s'étendant des deux côtés dans le sens de l'étendue transversale, pour la liaison articulée avec au moins deux autres maillons (1), la face inférieure du maillon (1) au-dessous du canal (2) présentant une structure à dents (8) s'étendant dans le sens de l'étendue transversale.

7. Maillon (1) selon la revendication 6, **caractérisé en ce que** la face supérieure du maillon (1) présente une plaque de montage (7) pour fixer des consommateurs.

8. Arrangement de bande à maillons (100), comprenant une bande à maillons tournante et une chaîne d'acheminement d'énergie (30) pour des lignes d'alimentation (36), une extrémité de la chaîne d'acheminement d'énergie (30) étant disposée de manière rotative et centralement à l'intérieur de la trajectoire de rotation et l'autre extrémité de la chaîne d'acheminement d'énergie (30) étant reliée avec un maillon (1) de la bande à maillons par l'intermédiaire duquel la bande à maillons peut être connectée aux lignes d'alimentation (36), la bande à maillons se composant d'une pluralité de maillons (1), **caractérisé en ce que** les maillons (1) respectivement présentent un canal (2) s'étendant dans le sens de rotation pour recevoir des lignes de distribution (40) et, disposé à côté du canal (2), une goulotte (3) ouverte vers l'intérieur, à l'intérieur de laquelle la partie inférieure de la chaîne d'acheminement d'énergie (30) est guidée latéralement, qu'un châssis de support est prévu qui présente des glissières de guidage (13) dans lesquelles la trajectoire de rotation de la bande à maillons est guidée latéralement, et que des poulies de renvoi (6) sont prévus par lesquels la bande à maillons peut passer de la glissière de guidage supérieure vers la glissière de guidage inférieure.

9. Arrangement de bande à maillons (100), **caractérisé en ce qu'**au moins quelques maillons (1) présentent, sur son côté montrant vers l'intérieur dans la trajectoire de rotation, une structure à dents (8) orientée transversalement par rapport à la direction de rotation et s'étendant sur une zone au-dessous du canal (2).

10. Arrangement de bande à maillons selon la revendication 8 ou 9, **caractérisé en ce qu'**un des poulies de renvoi (6) peut être entrainé en rotation.
